# EUROPEAN PATENT APPLICATION

(11) **EP 4 598 259 A1**
(43) Date of publication of application: **06.08.2025**
(21) Application number: 23870482.9
(22) Date of filing: 19.09.2023
(51) Int. Cl.: H04W 76/27

(54) **SMALL DATA TRANSMISSION METHOD, TERMINAL, DEVICE AND STORAGE MEDIUM**

(30) Priority: 29.09.2022 CN 202211203966
(71) Applicant: Datang Mobile Communications Equipment Co., Ltd., Beijing 100085 (CN)
(72) Inventor: SHI, Jie, Beijing 100085 (CN); FU, Jing, Beijing 100085 (CN); SUN, Jiancheng, Beijing 100085 (CN)
(74) Representative: Studio Torta S.p.A.
(86) International application number: PCT/CN2023/119707
(87) International publication number: WO 2024/067250

(57) **Abstract**

The present disclosure provides a small data transmission method, a terminal, a device and a storage medium. The method comprises: determining a transmission mode of MT-SDT data, wherein the transmission mode comprises a CG-based first mode and a random access-based second mode; and when it is determined that an MT-SDT process is triggered, sending an RRC recovery request message to the network device on the basis of the determined transmission mode.

## Description

### CROSS-REFERENCES TO RELATED APPLICATIONS

The present application claims priority to Chinese Patent Application No. 202211203966.6 filed on September 29, 2022, entitled "Small Data Transmission Method, Terminal, Device and Storage Medium", which is hereby incorporated by reference in its entirety.

### FIELD

The present application relates to the field of communications, and in particular, to a method and an apparatus for small data transmission, a terminal, and a storage medium.

### BACKGROUND

For user equipment (UE) in an inactive state, in case that there is uplink small data generated and needs to be transmitted to the network side, the UE initiates a mobile original small data transmission (MO-SDT) procedure.

Mobile terminate small data transmission (MT-SDT) is introduced in the related art. The network side needs to transmit downlink small data to the UE, transmit a paging message, and indicate the MT-SDT procedure. In case of selecting a way of transmission for MT-SDT data by the terminal, if the selection procedure for way of transmission for MO-SDT is fully reused, on the one hand, due to the smaller size of MT-SDT data compared to MO-SDT data, network resources are wasted, and on the other hand, MT-SDT still prefers the transmission of configured grant (CG) resources, which may lead to long access delay.

### BRIEF SUMMARY

In response to the above-mentioned problems in the related art, embodiments of the present application provide a method and an apparatus for small data transmission, a terminal, and a storage medium.

Embodiments of the present application provide a method for small data transmission, including:
determining a way of transmission for mobile terminate small data transmission (MT-SDT) data, where the way of transmission includes a first way based on configured grant (CG) and a second way based on random access; and
transmitting a radio resource control (RRC) resume request message to a network device based on the determined way of transmission in case that it is determined that an MT-SDT procedure is triggered.

In an embodiment, determining the way of transmission for the MT-SDT data includes:
determining a first priority of the first way based on CG and a second priority of the second way based on random access based on first information transmitted from the network device or pre-defined; and
determining the way of transmission for the MT-SDT data based on the first priority and the second priority.

In an embodiment, determining the first priority of the first way based on CG and the second priority of the second way based on random access includes:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

In an embodiment, determining the first priority of the first way based on CG and the second priority of the second way based on random access includes:
determining the first priority of the first way based on CG and the second priority of the second way based on random access based on the first information transmitted from the network device or pre-defined, where
the first information includes delay information and/or indication information, where the delay information is used to represent a delay requirement for the MT-SDT, and the indication information is used to indicate that the network device triggers the MT-SDT procedure or uses the MT-SDT procedure to trigger an uplink response message for a paging message.

In an embodiment, determining that the first priority of the first way based on CG is higher than the second priority of the second way based on random access in case that the first information includes the indication information.

In an embodiment, the indication information is further used to indicate whether to use the first way based on CG to transmit an uplink response message for the MT-SDT procedure or whether to use the second way based on random access to transmit an uplink response message for the MT-SDT procedure.

In an embodiment, determining the first priority of the first way based on CG and the second priority of the second way based on random access includes:
in case that the indication information indicates to use the first way based on CG to transmit the uplink response message for the MT-SDT procedure, and/or the first way based on CG meets the delay requirement, determining that the first priority of the first way based on CG is higher than the second priority of the second way based on random access.

In an embodiment, the first way based on CG meets the delay requirement, including:
a time difference between a time-domain position of the CG resource corresponding to the first way based on CG and a time point of receiving the paging message transmitted from the network device meets the delay requirement; or
the CG resource corresponding to the first way based on CG meets the delay requirement.

In an embodiment, determining the first priority of the first way based on CG and the second priority of the second way based on random access includes:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

In an embodiment, the second way based on random access meets the delay requirement, including:
a time difference between a time-domain position of a random access resource corresponding to the second way based on random access and a time point of receiving the paging message transmitted from the network device meets the delay requirement; or
a random access resource corresponding to the second way based on random access meets the delay requirement.

In an embodiment, determining the way of transmission for the MT-SDT data based on the first priority and the second priority includes:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, where
the CG resource corresponding to the first way based on CG meets validity, including:
   a corresponding carrier is configured with the first way based on CG;
   a timing advance corresponding to the first way based on CG is valid; and
   there is at least one reference signal, configured for the first way based on CG, with a channel quality corresponding thereto higher than a channel threshold value of a CG resource associated with the MT-SDT procedure.

In an embodiment, the second way based on random access includes a way based on two-step random access and a way based on four-step random access; and
determining the way of transmission for the MT-SDT data based on the first priority and the second priority includes:
in case that it is determined that the second priority of the second way based on random access is higher than the first priority of the first way based on CG, determining the way of transmission for the MT-SDT data based on a priority of the way based on two-step random access, a priority of the way based on four-step random access, validity of the way based on two-step random access, and validity of the way based on four-step random access.

In an embodiment, in case that it is determined that the priority of the way based on random access is higher than the priority of the way based on four-step random access, determining the way of transmission for the MT-SDT data based on the priority of the way based on two-step random access, the priority of the way based on four-step random access, the validity of the way based on two-step random access, and the validity of the way based on four-step random access includes:
determining the way of transmission for the MT-SDT data as the way based on two-step random access in case that the way based on two-step random access meets validity;
determining whether the way based on four-step random access meets validity in case that the way based on two-step random access does not meet validity; and
determining the way of transmission for the MT-SDT data as the way based on four-step random access in case that the way based on four-step random access meets validity.

In an embodiment, the way based on two-step random access meets validity, including one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, including one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

In an embodiment, the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

In an embodiment, the delay information is used to represent one or more of the following:
a delay difference associated threshold value; or
an urgency level of delay of an associated service for the MT-SDT procedure.

In an embodiment, the method further includes:
receiving one or more of the following from the network device:
a size threshold value of a data packet for the MT-SDT procedure;
a channel threshold value of a CG resource associated with the MT-SDT procedure; or
a channel threshold value of a random access resource associated with the MT-SDT procedure.

In an embodiment, the channel threshold value of the random access resource associated with the MT-SDT procedure is same to a channel threshold value of a random access resource associated with a mobile original small data transmission (MO-SDT) procedure configured by the network device;
and/or
the channel threshold value of the CG resource associated with the MT-SDT procedure is same to a channel threshold value of a CG resource associated with a mobile original small data transmission (MO-SDT) procedure configured by the network device.

Embodiments of the present application further provide a terminal, including a memory, a transceiver, and a processor, where
the memory is used for storing a computer program, the transceiver is used for receiving and transmitting data under control of the processor, and the processor is used for reading the computer program in the memory and performing the method for small data transmission as described above.

Embodiments of the present application further provide an apparatus for small data transmission, including:
a determining unit, used for determining a way of transmission for mobile terminate small data transmission (MT-SDT) data, where the way of transmission includes a first way based on configured grant (CG) and a second way based on random access; and
a transmitting unit, used for transmitting a radio resource control (RRC) resume request message to a network device based on the determined way of transmission in case that it is determined that an MT-SDT procedure is triggered.

In an embodiment, the determining unit includes:
a first determining module, used for determining a first priority of the first way based on CG and a second priority of the second way based on random access based on first information transmitted from the network device or pre-defined; and
a second determining module, used for determining the way of transmission for the MT-SDT data based on the first priority and the second priority.

In an embodiment, the first determining module is used for:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

In an embodiment, the first determining module is used for:
determining the first priority of the first way based on CG and the second priority of the second way based on random access based on the first information transmitted from the network device or pre-defined, where
the first information includes delay information and/or indication information, where the delay information is used to represent a delay requirement for the MT-SDT, and the indication information is used to indicate that the network device triggers the MT-SDT procedure or uses the MT-SDT procedure to trigger an uplink response message for a paging message.

In an embodiment, determining that the first priority of the first way based on CG is higher than the second priority of the second way based on random access in case that the first information includes the indication information.

In an embodiment, the indication information is further used to indicate whether to use the first way based on CG to transmit an uplink response message for the MT-SDT procedure or whether to use the second way based on random access to transmit an uplink response message for the MT-SDT procedure.

In an embodiment, the first determining module is used for:
in case that the indication information indicates to use the first way based on CG to transmit the uplink response message for the MT-SDT procedure, and/or the first way based on CG meets the delay requirement, determining that the first priority of the first way based on CG is higher than the second priority of the second way based on random access.

In an embodiment, the first way based on CG meets the delay requirement, including:
a time difference between a time-domain position of the CG resource corresponding to the first way based on CG and a time point of receiving the paging message transmitted from the network device meets the delay requirement; or
the CG resource corresponding to the first way based on CG meets the delay requirement.

In an embodiment, the first determining module is used for:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

In an embodiment, the second way based on random access meets the delay requirement, including:
a time difference between a time-domain position of a random access resource corresponding to the second way based on random access and a time point of receiving the paging message transmitted from the network device meets the delay requirement; or
a random access resource corresponding to the second way based on random access meets the delay requirement.

In an embodiment, the second determining module is used for:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, where
the CG resource corresponding to the first way based on CG meets validity, including:
   a corresponding carrier is configured with the first way based on CG;
   a timing advance corresponding to the first way based on CG is valid; and
   there is at least one reference signal, configured for the first way based on CG, with a channel quality corresponding thereto higher than a channel threshold value of a CG resource associated with the MT-SDT procedure.

In an embodiment, the second way based on random access includes a way based on two-step random access and a way based on four-step random access, and the second determining module is used for:
in case that it is determined that the second priority of the second way based on random access is higher than the first priority of the first way based on CG, determining the way of transmission for the MT-SDT data based on the priority of the way based on two-step random access, the priority of the way based on four-step random access, the validity of the way based on two-step random access, and the validity of the way based on four-step random access.

In an embodiment, the second priority of the way based on random access is higher than the second priority of the way based on four-step random access, and the second determining module is used for:
determining whether the way based on two-step random access meets validity;
determining the way of transmission for the MT-SDT data as the way based on two-step random access in case that the way based on two-step random access meets validity;
determining whether the way based on four-step random access meets validity in case that the way based on two-step random access does not meet validity; and
determining the way of transmission for the MT-SDT data as the way based on four-step random access in case that the way based on four-step random access meets validity.

In an embodiment, the way based on two-step random access meets validity, including one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, including one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

In an embodiment, the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

In an embodiment, the delay information is used to represent one or more of the following:
a delay difference associated threshold value; or
an urgency level of delay of an associated service for the MT-SDT procedure.

In an embodiment, the apparatus for small data transmission provided in the embodiments of the present application further includes:
a receiving unit, used for receiving one or more of the following from the network device:
a size threshold value of a data packet for the MT-SDT procedure;
a channel threshold value of a CG resource associated with the MT-SDT procedure; or
a channel threshold value of a random access resource associated with the MT-SDT procedure.

In an embodiment, the channel threshold value of the random access resource associated with the MT-SDT procedure is same to a channel threshold value of a random access resource associated with a mobile original small data transmission (MO-SDT) procedure configured by the network device; and/or the channel threshold value of the CG resource associated with the MT-SDT procedure is same to a channel threshold value of a CG resource associated with a mobile original small data transmission (MO-SDT) procedure configured by the network device.

Embodiments of the present application further provide a processor-readable storage medium, where the processor-readable storage medium stores a computer program, and the computer program is used for causing a processor to perform the method for small data transmission as described above.

Embodiments of the present application further provide a computer-readable storage medium, where the computer-readable storage medium stores a computer program, and the computer program is used for causing a computer to perform the method for small data transmission as described above.

Embodiments of the present application further provide a communication device-readable storage medium, where the communication device-readable storage medium stores a computer program, and the computer program is used for causing a communication device to perform the method for small data transmission as described above.

Embodiments of the present application further provide a chip product-readable storage medium, where the communication device-readable storage medium stores a computer program, and the computer program is used for causing a chip product to perform the method for small data transmission as described above.

In the method and the apparatus for small data transmission, the terminal, and the storage medium provided in the embodiments of the present application, in case that the terminal determines that it is an MT-SDT procedure that triggered by the network device, the terminal selects a way of transmission or the MT-SDT data, including small data transmission based on configured grant (CG) resource (CG-SDT), and small data transmission based on random access (RA-SDT). Based on the determined way of transmission, the terminal transmits an RRC resume request message to the network device to request the network device to resume MT-SDT associated radio bearers, which provides a selection method for the way of transmission for the MT-SDT procedure.

### BRIEF DESCRIPTION OF THE DRAWINGS

To illustrate solutions in the embodiments of the present application or the related art more clearly, the drawings used in the descriptions of the embodiments or the related art are briefly described below. The drawings in the following description are some embodiments of the present application, and other drawings may be obtained based on these drawings without any creative effort for those skilled in the art.
FIG. 1 is a schematic flowchart of a four-step random access provided by the related art;
FIG. 2 is a schematic flowchart of a two-step random access provided by the related art;
FIG. 3 is a schematic flowchart of a mobile terminate small data transmission (MT-SDT) procedure according to an embodiment of the present application;
FIG. 4 is a schematic flowchart of a method for small data transmission according to an embodiment of the present application;
FIG. 5 is a schematic structural diagram of a terminal according to an embodiment of the present application; and
FIG. 6 is a schematic structural diagram of an apparatus for small data transmission according to an embodiment of the present application.

### DETAILED DESCRIPTION

To better describe the solutions in the embodiments of the present application, related knowledge is introduced below.

### 1. mobile original small data transmission (MO-SDT) procedure

Small data transmission (SDT) may include: small data transmission based on configured grant (CG) resource (CG-SDT), and small data transmission based on random access (RA) (RA-SDT). RA-SDT may further include an SDT based on two-step random access (two-step RA-SDT) and an SDT based on four-step random access (four-step RA-SDT).

In case that user equipment (UE) is in an inactive state, the UE transmits a small data packet on a pre-configured uplink resource (CG-SDT resource), or transmits a small data packet on MsgA (a two-step random access is triggered) or Msg3 (a four-step random access is triggered). The small data packet includes a data radio bearer (DRB) data packet and a signaling radio bearer (SRB) data packet. An MO-SDT procedure is classified based on a type of a transmission resource as follows:

### (1) CG-SDT

The CG resources used for the MO-SDT procedure are dedicated resources configured by the network side for certain UE. Based on the received information of CG resources for the MO-SDT, the network side may determine the identification information of the UE, and determine that this is a UE-triggered small data transmission procedure based on CG resource. Based on the CG-SDT procedure, the network side synchronously initializes the associated bearer. CG resources are periodic resources, and there is limitation of a payload size threshold for the CG resources. Only when the size of the uplink data packet does not exceed this payload size threshold, may the CG-SDT procedure be used for transmission.

### (2) Four-step RA-SDT

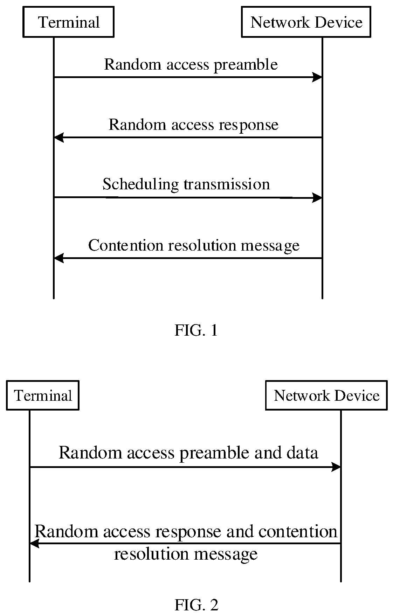

FIG. 1 is a schematic flowchart of a four-step random access provided by the related art. As shown in FIG. 1, the four-step random access (four-step RA) is a contention-based random access, and the small data transmission of the four-step random access is a contention-based random access procedure. The four-step random access includes the following steps.

Step 1: UE transmits a message (Msg) 1 to a network side device.

The UE selects a random access preamble and a physical random access channel (PRACH) resource, and uses the PRACH resource to transmit the selected random access preamble to the network device.

Step 2: the network device transmits a Msg2 to the UE.

The network device receives the random access preamble transmitted from the UE and transmits a random access response to the UE, which carries an uplink scheduling grant (UL grant) available for transmitting the message.

Step 3: the UE transmits a Msg3 to the network device.

The UE transmits uplink transmission on the UL grant indicated in Msg2, and the content of uplink transmission varies for different random accesses in Msg3. For SDT, the content includes SDT data and an RRC resume request message.

Step 4: the network device transmits a Msg4 to the UE.

The network device transmits a contention resolution message to the UE, and the UE determines whether the random access is successful based on Msg4.

### (3) Two-Step RA-SDT

FIG. 2 is a schematic flowchart of a two-step random access provided by the related art. As shown in FIG. 2, a two-step RA procedure is derived based on the four-step RA. The two-step RA includes the following steps.

Step 1: UE transmits a MsgA to a network device.

MsgA refers to preamble transmission on the PRACH and data transmission (including payload size) on a physical uplink shared channel (PUSCH), which is equivalent to Msg1 and Msg3 in the four-step RACH.

Step 2: the network device transmits a MsgB to the UE.

MsgB is a random access response and contention resolution message, which is equivalent to Msg2 and/or Msg4 in the four-step RACH.

In the random access procedure with small data transmission intervention mentioned above, in case that the UE receives a response message from the network device after transmitting an RRC resume request message and an SDT data packet in the CG resource, the MsgA in the two-step random access, or the Msg3 in the four-step random access, the SDT access is successful, and the UE may subsequently proceed with data transmission and reception in an inactive state.

In the two-step random access and four-step random access procedures, CG resource and preamble resource configuration corresponding to the MO-SDT procedure are introduced for the MO-SDT procedure. The network pre-configures these resources, and in case that the UE wants to trigger the MO-SDT procedure, the UE transmits a preamble on the corresponding resource. The network side learns that this is the MO-SDT procedure and initializes the configuration of SDT-associated bearers.

### 2. Selection of a way of transmission for an MO-SDT procedure

For the MO-SDT procedure, the UE first evaluates whether the size of the UL data currently being prepared for transmission is smaller than a pre-configured threshold value and whether a channel quality is lower than a pre-configured threshold value. In case that both condition are met, the UE further performs carrier selection for the uplink in a supplementary uplink (SUL) and a normal uplink (UL). After completing the carrier selection, in case that there is relevant SDT configuration on the corresponding carrier, the preferred way of transmission is CG-SDT. It is evaluated whether the condition for CG-SDT is met, and in case that it does, CG-SDT is selected; in case that it does not, the preferred way of transmission is two-step RA. It is evaluated whether the condition for two-step RA is met. In case that it does, two-step RA-SDT is selected; in case that it does not, it is further evaluated whether the condition for four-step RA is met. In case that it does, the four-step RA-SDT is selected. As may be seen, the priority order throughout the entire MO-SDT procedure is: CG-SDT > two-step RA-SDT > four-step RA-SDT.

### (3) MT-SDT procedure

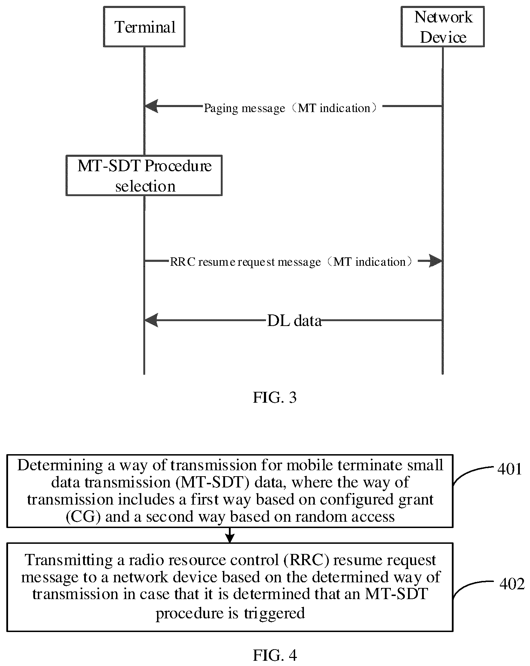

FIG. 3 is a schematic flowchart of a mobile terminate small data transmission (MT-SDT) procedure according to an embodiment of the present application. As shown in FIG. 3, the MT-SDT procedure includes at least the following steps:
step 301: in case that a network side generates small data and determines to use the MT-SDT procedure for transmission, the network side transmits a paging message to UE, which carries MT indication information indicating that this is an MT-SDT procedure being triggered;
step 302: the terminal selects a corresponding SDT procedure (way of transmissions include CG-SDT, two-step RA-SDT, or four-step RA-SDT), and transmits an RRC resume request message to the network device, which carries MT indication information; and
step 303: after receiving the RRC resume request message, the network device starts configuring the MT-SDT associated bearer entities and transmits downlink small data to the terminal.

After introducing the MT-SDT procedure, the UE receives a paging message carrying MT indication information transmitted from the network device. In case of selecting the way of transmission, it is inappropriate to completely reuse the selection procedure and parameters of the way of transmission for MO-SDT. On the one hand, the channel threshold value used for selection of way of transmission for the MO-SDT procedure is associated with a size of the transmitted uplink data. Due to the smaller size of MT-SDT data compared to MO-SDT data, the channel threshold value corresponding to the MO-SDT procedure may lead to wastage of network resources and is no longer applicable. On the other hand, in case that configured grant (CG) resources are still preferred for MT-SDT, the lack of delay information for downlink data and the periodicity of CG resources in the terminal may result in long access delays.

In response to the above-mentioned problems in the related art, embodiments of the present application provide a method and an apparatus for small data transmission, a terminal, and a storage medium. In case that the terminal determines that the network device triggers the MT-SDT procedure, the terminal selects the way of transmission for the MT-SDT data, including CG-SDT and RA-SDT. Based on the determined way of transmission, the terminal transmits an RRC resume request message to the network device to request the network device to resume MT-SDT associated radio bearers, which provides a selection method for the way of transmission for the MT-SDT procedure.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions provided in the embodiments of the present application may be applied in various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a radio connection function, or other processing devices connected to a radio modem. In different systems, the names of the terminal device may be different. For example, in the 5G system, the terminal device may be called as a user equipment (UE). A radio terminal device may communicate with one or more core networks (CNs) via a radio access network (RAN), and the radio terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, it may be a personal communication service (PCS) phone, a radio phone, a session initiated protocol (SIP) phone, a wireless local loop (WLL) station, a personal digital assistant (PDA) and other devices. A radio terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a radio terminal device through one or more sectors on the air interface in the access network, or other names. The network device may be used for exchanging received air frames with Internet Protocol (IP) packets, and acting as a router between the radio terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

In all embodiments of the present application, during data transmission between the terminal and the network in the MT-SDT or MO-SDT procedure, the terminal is in an inactive state or an idle state.

FIG. 4 is a schematic flowchart of a method for small data transmission according to an embodiment of the present application. As shown in FIG. 4, the method is performed by a terminal, and the method includes at least the following steps.
Step 401: determining a way of transmission for mobile terminate small data transmission (MT-SDT) data, where the way of transmission includes a first way based on configured grant (CG) and a second way based on random access; and
Step 402: transmitting a radio resource control (RRC) resume request message to a network device based on the determined way of transmission in case that it is determined that an MT-SDT procedure is triggered.

In an embodiment, for the MT-SDT procedure, the terminal receives a paging message transmitted from the network device, determines that the paging is due to MT-SDT data, or determines that a paging type is MT-SDT type, or that the paging message carries MT indication information. The terminal determines that the network device triggers the MT-SDT procedure.

The terminal determines the way of transmission for the MT-SDT data, where the way of transmission includes the first way based on CG and the second way based on random access. The first way based on CG is CG-SDT, and the second way based on random access is RA-SDT. The resources configured by the network device for transmitting information associated with the MT-SDT procedure are classified into CG resources and RA resources based on resource types. The way of transmission for transmitting MT-SDT data using CG resources is CG-SDT, and the way of transmission for transmitting MT-SDT data using RA resources is RA-SDT.

After determining the way of transmission, the terminal transmits an RRC resume request message to the network device by the determined way of transmission. The RRC resume request message is used to request the network device to resume MT-SDT associated radio bearers.

In the method for small data transmission provided in the embodiments of the present application, in case that the terminal determines that the network device triggers the MT-SDT procedure, the terminal selects the way of transmission for the MT-SDT data, including CG-SDT and RA-SDT. Based on the determined way of transmission, the terminal transmits an RRC resume request message to the network device to request the network device to resume MT-SDT associated radio bearers, which provides a selection method for the way of transmission for the MT-SDT procedure.

In an embodiment, step 401: determining the way of transmission for the MT-SDT data includes:
determining the first priority of the first way based on CG and the second priority of the second way based on random access based on the first information transmitted from the network device or pre-defined;
determining the way of transmission for the MT-SDT data based on the first priority and the second priority.

In an embodiment, the terminal determines the first priority of CG-SDT and the second priority of RA-SDT based on the first information transmitted from the network device or predefined, and determines the way of transmission for the MT-SDT data based on the determined first priority and the second priority.

In case that the first priority of CG-SDT is higher than the second priority of RA-SDT, the validity of CG-SDT is evaluated. In case that a CG resource for MT-SDT is available, CG-SDT is used to transmit MT-SDT data; in case that the CG resource used for MT-SDT is unavailable, the validity of the RA resource used for MT-SDT is further evaluated. In case that the RA resource is available, RA-SDT is used to transmit MT-SDT data.

In case that the second priority of RA-SDT is higher than the first priority of CG-SDT, the validity of RA-SDT is evaluated. In case that an RA resource for MT-SDT is available, RA-SDT is used to transmit MT-SDT data; in case that the RA resource used for MT-SDT is unavailable, the validity of the CG resource used for MT-SDT is further evaluated. In case that the CG resource is available, CG-SDT is used to transmit MT-SDT data.

In the method for small data transmission provided in the embodiments of the present application, the terminal evaluates the first priority of CG-SDT and the second priority of RA-SDT based on the first information transmitted from the network device or pre-defined, and determines the way of transmission for the MT-SDT data based on the first priority and the second priority, which further clarifies the selection method for the way of transmission for the MT-SDT procedure.

In an embodiment, determining the first priority of the first way based on CG and the second priority of the second way based on random access includes:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

In an embodiment, the resources configured by the network device for transmitting information associated with the MT-SDT procedure are classified into CG resources and RA resources based on resource types. Furthermore, the resources may be classified, based on resource usage, into MT-SDT procedure dedicated resources or shared resources for the MT-SDT procedure and MO-SDT procedure. The terminal determines the way of transmission for the MT-SDT data based on the resource usage (dedicated or shared resources, where the first information is used to represent the resource usage), including:
in case that the CG resource corresponding to CG-SDT is a shared resource for the MT-SDT procedure and the MO-SDT procedure, and the RA resource corresponding to RA-SDT is a dedicated resource for the MT-SDT procedure, it is considered that the second priority of RA-SDT is higher than the first priority of CG-SDT. The terminal may preferably select the RA resource dedicated to the MT-SDT procedure, and the preferred way of transmission for the MT-SDT data is RA-SDT;
in case that the CG resource corresponding to CG-SDT is a dedicated resource for the MT-SDT procedure, regardless of whether the RA resource corresponding to RA-SDT is a dedicated resource for the MT-SDT procedure or a shared resource for the MT-SDT procedure and the MO-SDT procedure, it may be considered that the first priority of CG-SDT is higher than the second priority of RA-SDT. The terminal may preferably select the CG resource and the preferred way of transmission for the MT-SDT data is CG-SDT; and
in case that the CG resource corresponding to CG-SDT and the RA resource corresponding to RA-SDT are both dedicated resources for the MT-SDT procedure, or shared resources for the MT-SDT procedure and the MO-SDT procedure, it is considered that the first priority of CG-SDT is higher than the second priority of RA-SDT. The terminal may preferably select the CG resource and the preferred way of transmission for the MT-SDT data is CG-SDT.

Furthermore, the network device may provide information on a success rate or a busy rate of the shared resource for MT-SDT and MO-SDT. In case that the success rate information transmitted from the network side is higher than a specified threshold value, or the busy rate information is lower than a specified threshold value, the UE selects the CG resource shared by MO-SDT and MT-SDT to trigger the MT-SDT procedure, otherwise the UE uses the RA resource dedicated to MT-SDT to trigger the MT-SDT procedure.

In the method for small data transmission provided in the embodiments of the present application, the terminal determines the way of transmission for the MT-SDT data based on the resource usage. In case that the CG resource corresponding to CG-SDT is a shared resource for the MT-SDT procedure and the MO-SDT procedure, and the RA resource corresponding to RA-SDT is a dedicated resource for the MT-SDT procedure, the terminal preferably selects the dedicated resource.

In an embodiment, determining the first priority of the first way based on CG and the second priority of the second way based on random access includes:
determining the first priority of the first way based on CG and the second priority of the second way based on random access based on the first information transmitted from the network device or pre-defined, where
the first information includes delay information and/or indication information, where the delay information is used to represent a delay requirement for the MT-SDT, and the indication information is used to indicate that the network device triggers the MT-SDT procedure or uses the MT-SDT procedure to trigger an uplink response message for a paging message.

In an embodiment, the terminal determines the first priority of CG-SDT and the second priority of RA-SDT, including:
determining the first priority of CG-SDT and the second priority of RA-SDT based on the first information transmitted from the network device or pre-defined, where
the first information may include delay information and/or indication information. The delay information refers to the delay information of the network device transmitting downlink data, which is used to represent the delay requirement of the network device. The delay information may be transmitted from the network device or pre-defined by a protocol. The indication information is MT indication, indicating that the network device triggers the MT-SDT procedure, or indicating that the network device uses the MT-SDT procedure to trigger an uplink response message for a paging message.

In case that the terminal receives the delay information and/or the indication information, the terminal needs to determine the priority of CG-SDT and RA-SDT based on the delay information and/or the indication information.

In the method for small data transmission provided in the embodiments of the present application, the terminal determines the way of transmission for the MT-SDT data based on the delay information and/or MT indication of the network device, which allows the terminal to consider whether the CG resource meets the delay requirement of the network side in case of selecting a way of transmission for the MT-SDT data. Otherwise, the way of RA-SDT is selected to transmit the MT-SDT data to meet the delay requirement.

In an embodiment, the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

In an embodiment, the first information transmitted from the network device or pre-defined in embodiments of the present application may be carried by one or more of the following: a paging message transmitted from the network device, downlink control information in a paging message transmitted from the network device, a broadcast and/or system message (such as a system information block (SIB) message) transmitted from the network device, an RRC release message transmitted from the network device, other RRC messages dedicated for the MT-SDT procedure, or other RRC dedicated messages transmitted from the network device.

In an embodiment, the delay information is used to represent one or more of the following:
a delay difference associated threshold value; or
an urgency level of delay of an associated service for the MT-SDT procedure.

In an embodiment, the delay information transmitted from the network device or pre-defined may be a delay difference associated threshold value, or an urgency level of delay of an associated service or bearer for the MT-SDT procedure.

In an embodiment, it is determined that the first priority of the first way based on CG is higher than the second priority of the second way based on random access in case that the first information includes the indication information.

In an embodiment, in case that the first information includes the indication information, i.e., the MT indication, the terminal considers the first priority of CG-SDT to be higher than RA-SDT only based on the MT indication. That is, in case that the terminal only receives the MT indication or does not combine other information but bases solely on the MT indication, the terminal may assume or default that the first priority of CG-SDT is higher than the second priority of RA-SDT. The terminal preferably selects CG-SDT to transmit MT-SDT data and evaluates the validity of CG-SDT. In case that the CG resource for MT-SDT is available, CG-SDT is used to transmit MT-SDT data; in case that the CG resource for MT-SDT is unavailable, the validity of RA-SDT is further evaluated, and RA-SDT is used to transmit the MT-SDT data.

In the method for small data transmission provided in the embodiments of the present application, the terminal considers, based on the MT indication, the first priority of CG-SDT to be higher than the second priority of RA-SDT, and preferably selects CG-SDT to transmit MT-SDT data, which further clarifies the selection method for the way of transmission for the MT-SDT procedure.

In an embodiment, the indication information is further used to indicate whether to use the first way based on CG to transmit an uplink response message for the MT-SDT procedure or whether to use the second way based on random access to transmit an uplink response message for the MT-SDT procedure.

In an embodiment, the terminal determines the priority of the way of transmission for the MT-SDT data based on the first information, which includes delay information and/or indication information. The indication information is used to indicate that the network device triggers the MT-SDT procedure or uses the MT-SDT procedure to trigger the uplink response message for the paging message.

The indication information may directly indicate whether the terminal may use the first way based on CG, namely CG-SDT to transmit the uplink response message for the MT-SDT procedure. Alternatively, the indication information may also directly indicate whether to use the second way based on random access, namely RA-SDT to transmit the uplink response message for the MT-SDT procedure.

In case that the indication information indicates that the terminal may use CG-SDT to transmit the uplink response message for the MT-SDT procedure, then the evaluation of CG resource is entered. Whether the CG resource meets a corresponding condition is evaluated. In case that the CG resource meets the corresponding condition, the way of transmission for the MT-SDT data is determined as CG-SDT; in case that the CG resource does not meet the corresponding condition, then the evaluation of the random access resource corresponding to the second way based on random access (RA-SDT) is entered.

In case that the indication information indicates that the terminal is not allowed to use CG-SDT to transmit the uplink response message for the MT-SDT procedure, even in case that the terminal defaults that the first priority of CG-SDT is higher than the second priority of RA-SDT, the terminal may directly skip the evaluation of CG resource and enter the evaluation of the random access resource corresponding to the second way based on random access (RA-SDT).

In an embodiment, determining the first priority of the first way based on CG and the second priority of the second way based on random access includes:
in case that the indication information indicates to use the first way based on CG to transmit the uplink response message for the MT-SDT procedure, and/or in case that the first way based on CG meets the delay requirement, then it is determined that the first priority of the first way based on CG is higher than the second priority of the second way based on random access.

In an embodiment, the terminal determines the second priority of CG-SDT and RA-SDT, including:
in case that the indication information indicates to use CG-SDT to transmit the uplink response message for the MT-SDT procedure, and/or in case that CG-SDT meets the delay requirement, then it is determined that the first priority of CG-SDT is higher than RA-SDT.

In case that the indication information indicates to use CG-SDT to transmit the uplink response message for the MT-SDT procedure, the terminal considers the first priority of CG-SDT to be higher than the second priority of RA-SDT; in case that CG-SDT meets the delay requirement, the terminal considers the first priority of CG-SDT to be higher than the second priority of RA-SDT; in case that the indication information indicates to use CG-SDT to transmit MT-SDT data and CG-SDT meets the delay requirement, the terminal considers the first priority of CG-SDT to be higher than the second priority of RA-SDT.

The terminal determines the way of transmission for the MT-SDT data based on the first priority of CG-SDT and the second priority of RA-SDT. In case that the first priority of CG-SDT is higher, the validity of CG-SDT is first evaluated. In case that CG-SDT is unavailable, the validity of RA-SDT is further evaluated.

In an embodiment, the first way based on CG meets the delay requirement, including:
a time difference between a time-domain position of the CG resource corresponding to the first way based on CG and a time point of receiving the paging message transmitted from the network device meets the delay requirement; or
the CG resource corresponding to the first way based on CG meets the delay requirement.

In an embodiment, CG-SDT meeting the delay requirement refers to the CG resource corresponding to CG-SDT meeting the delay requirement. The CG resource meeting the delay requirement may be a quality of service (QoS) level delay requirement. For example, in case that the CG resource corresponding to the current CG-SDT meets QoS Level 3 or below, and the delay requirement carried in the current paging message is QoS Level 4, then it is indicated that the CG resource corresponding to the current CG-SDT is unavailable.

Alternatively, CG-SDT meeting the delay requirement refers to a time difference between a time-domain position of a CG resource corresponding to CG-SDT and a time point of receiving the paging message transmitted from the network device meets the delay requirement. The delay requirement may be a pre-configured value.

In an embodiment, determining the first priority of the first way based on CG and the second priority of the second way based on random access includes:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

In an embodiment, the terminal determines the first priority of CG-SDT and the second priority of RA-SDT based on the indication information and/or the delay information, including:
in case that the indication information indicates not to use CG-SDT to transmit the uplink response message for the MT-SDT procedure, the terminal considers that the second priority of RA-SDT is higher than the first priority of CG-SDT, and the preferred way of transmission for the MT-SDT data is RA-SDT; in case that CG-SDT does not meet the delay requirement, the terminal considers the second priority of RA-SDT to be higher than the first priority of CG-SDT, and the preferred way of transmission for the MT-SDT data is RA-SDT; in case that the indication information indicates not to use CG-SDT to transmit the uplink response message for the MT-SDT procedure, and CG-SDT does not meet the delay requirement, the terminal considers the second priority of RA-SDT to be higher than the first priority of CG-SDT, and the preferred way of transmission for the MT-SDT data is RA-SDT.
in case that the indication information indicates to use RA-SDT to transmit the uplink response message for the MT-SDT procedure, the terminal considers the second priority of RA-SDT to be higher than the first priority of CG-SDT, and the preferred way of transmission for the MT-SDT data is RA-SDT; in case that RA-SDT meets the delay requirement, the terminal considers the second priority of RA-SDT to be higher than the first priority of CG-SDT, and the preferred way of transmission for the MT-SDT data is RA-SDT; in case that the indication information indicates to use RA-SDT to transmit the uplink response message for the MT-SDT procedure, and RA-SDT meets the delay requirement, the terminal considers the second priority of RA-SDT to be higher than the first priority of CG-SDT, and the preferred way of transmission for the MT-SDT data is RA-SDT.

The terminal determines the way of transmission for the MT-SDT data based on the first priority of CG-SDT and the second priority of RA-SDT. In case that the second priority of RA-SDT is higher, the validity of RA-SDT is first evaluated. In case that RA-SDT is unavailable, the validity of CG-SDT is further evaluated.

In an embodiment, the second way based on random access meets the delay requirement, including:
a time difference between a time-domain position of a random access resource corresponding to the second way based on random access and a time point of receiving the paging message transmitted from the network device meets the delay requirement; or
a random access resource corresponding to the second way based on random access meets the delay requirement.

In an embodiment, RA-SDT meets the delay requirement, which means that the RA resource corresponding to RA-SDT meets the delay requirement.

Alternatively, the time difference between the time-domain position of the RA resource corresponding to RA-SDT and the time point of receiving the paging message transmitted from the network device meets the delay requirement. The delay requirement may be a pre-configured value.

In an embodiment, determining the way of transmission for the MT-SDT data based on the first priority and the second priority includes:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, where
the CG resource corresponding to the first way based on CG meets validity, including:
   a corresponding carrier is configured with the first way based on CG;
   a timing advance corresponding to the first way based on CG is valid; and
   there is at least one reference signal, configured for the first way based on CG, with a channel quality corresponding thereto higher than a channel threshold value of a CG resource associated with the MT-SDT procedure.

In an embodiment, in case that the first priority of CG-SDT is determined to be higher than the second priority of RA-SDT, determining the way of transmission for the MT-SDT data based on the first priority and the second priority includes:
determining whether the CG resource corresponding to CG-SDT meets validity; and
in case that the CG resource corresponding to CG-SDT meets validity, determining the way of transmission for the MT-SDT data as CG-SDT; in case that the CG resource corresponding to CG-SDT does not meet validity, the validity of RA-SDT or the RA resource corresponding to RA-SDT is evaluated.

The terminal evaluates whether CG-SDT or the CG resource corresponding to CG-SDT meets the validity requirement, including the following.
(1) The corresponding carrier is configured with CG-SDT. The UE first evaluates whether the size of the SDT packet is smaller than the packet size threshold value associated with the MT-SDT procedure, and whether the channel quality is lower than the CG resource threshold value associated with the MT-SDT procedure. In case that both are met, uplink carrier selection is performed. CG-SDT needs to be configured on the corresponding carrier.
(2) The timing advance (TA) corresponding to CG-SDT is valid. The validity of timing advance is ensured by timing advance timer and channel change threshold. In case that the timing advance timer expires, it indicates that the timing advance is invalid and the CG resource is no longer available; in case that the channel change threshold value exceeds, it indicates that the distance between the terminal and the network device has changed significantly, the previous timing advance is no longer applicable, and the CG resource is no longer available.
(3) There is at least one reference signal, configured for the first way based on CG, with a channel quality corresponding thereto higher than a channel threshold value of a CG resource associated with the MT-SDT procedure.

In case that the channel quality is lower than the channel threshold value of CG resource associated with the MT-SDT procedure, it indicates that the distance between the terminal and the network device is too far, and the transmission rate of MT-SDT data is going to be affected. Therefore, in the reference signals configured for CG-SDT, there has to be at least one reference signal with a channel quality corresponding thereto higher than the channel threshold value. The reference signal may be a synchronization signal block (SSB), or a channel state information-reference signal (CSI-RS), etc. The channel quality may be a reference signal received power (RSRP), a reference signal received quality (RSRQ), a signal to noise ratio (SNR), a signal to interference plus noise ratio (SINR), or received signal strength indication (RSSI), etc.

For example, at least one SSB, configured for CG-SDT, with a synchronization signal-RSRP (SS-RSRP) higher than the CG-SDT RSRP threshold is available. For example, at least one CSI-RS, configured for CG-SDT, with a channel state information-RSRP (CSI-RSRP) higher than the CG-SDT RSRP threshold is available.

The terminal evaluates whether the first way based on CG meets validity. Only when the above conditions are met simultaneously, it indicates that CG-SDT meets validity.

In an embodiment, the second way based on random access includes a way based on two-step random access and a way based on four-step random access; and
determining the way of transmission for the MT-SDT data based on the first priority and the second priority includes:
in case that the second priority of the second way based on random access is higher than the first priority of the first way based on CG, determining the way of transmission for the MT-SDT data based on the priority of the two-step random access, the priority of the four-step random access, the validity of the two-step random access, and the validity of the four-step random access.

In an embodiment, RA-SDT may be further classified, based on the type of random access, into a way based on two-step random access (two-step RA-SDT) and a way based on four-step random access (four-step RA-SDT).

In case that it determined that the second priority of RA-SDT is higher than the first priority of CG-SDT, determining the way of transmission for the MT-SDT data based on the first priority and the second priority includes:
determining the way of transmission for the MT-SDT data based on the priority of the way based on two-step random access (two-step RA-SDT), the priority of the way based on four-step random access (four-step RA-SDT), the validity of the two-step RA-SDT, and the validity of the four-step RA-SDT.

In an embodiment, the terminal defaults that the priority of the two-step RA-SDT is higher than the priority of the four-step RA-SDT. In case that the terminal determines that the second priority of RA-SDT is higher than CG-RAT, or CG-RAT is unavailable and the evaluation of RA-SDT is entered, it is necessary to first evaluate the validity of the two-step RA-SDT. In case that the two-step RA-SDT is unavailable, the validity of the four-step RA-SDT is further evaluated.

In an embodiment, the priority of the way based on two-step random access is higher than the priority of the way based on four-step random access. Determining the way of transmission for the MT-SDT data based on the priority of the two-step random access, the priority of the four-step random access, the validity of the two-step random access, and the validity of the four-step random access includes:
determining whether the way based on two-step random access meets validity;
determining the way of transmission for the MT-SDT data as the way based on two-step random access in case that the way based on two-step random access meets validity;
determining whether the way based on four-step random access meets validity in case that the way based on two-step random access does not meet validity; and
determining the way of transmission for the MT-SDT data as the way based on four-step random access in case that the way based on four-step random access meets validity.

In an embodiment, in case that the terminal selects RA-SDT as the way of transmission for the MT-SDT data, the terminal considers that the second priority of the two-step RA-SDT is higher than the four-step RA-SDT. The terminal needs to first evaluate the validity of the two-step RA-SDT. In case that the two-step RA-SDT meets validity, it is determined that the way of transmission for the MT-SDT data is the two-step RA-SDT; in case that the two-step RA-SDT does not meet validity, the validity of the four-step RA-SDT is further evaluated. In case that the four-step RA-SDT meets validity, the terminal determines that the way of transmission for the MT-SDT data is the four-step RA-SDT; in case that the validity of the four-step RA-SDT is not met, it indicates that the MT-SDT data transmission fails.

Validity is used to evaluate whether the two-step RA-SDT or the RA resource corresponding to the two-step RA-SDT is available, and validity is used to evaluate whether the four-step RA-SDT or the RA resource corresponding to the four-step RA-SDT is available.

In an embodiment, the way based on two-step random access meets validity, including one or more of the following:
there is at least one reference signal, configured for the way based on two-step random access, with a channel quality corresponding thereto higher than a channel threshold value of a two-step random access resource associated with the MT-SDT procedure; or
a downlink path loss is lower than a channel threshold value of a two-step random access resource associated with the MT-SDT procedure;

In an embodiment, evaluating the validity of the two-step RA-SDT may be one or more of the following.
(1) There is at least one reference signal, configured for the two-step RA-SDT, with a channel quality corresponding thereto higher than a channel threshold value of a two-step RA resource associated with the MT-SDT procedure. The reference signal may be an SSB, and a CSI-RS, etc. The channel quality may be an RSRP, an RSRQ, an SNR, an SINR, or RSSI, etc. For example, there is at least one SSB, configured for the two-step RA-SDT, with an RSRP corresponding thereto higher than a channel threshold value of a two-step RA resource associated with the MT-SDT procedure.
(2) The downlink path loss is lower than the channel threshold value of the two-step random access resource associated with the MT-SDT procedure.

In an embodiment, the way based on four-step random access meets validity, including one or more of the following:
there is at least one reference signal, configured for the way based on four-step random access, with a channel quality corresponding thereto higher than a channel threshold value of a four-step random access resource associated with the MT-SDT procedure; or
a downlink path loss is lower than a channel threshold value of a four-step random access resource associated with the MT-SDT procedure.

In an embodiment, evaluating that the four-step RA-SDT meets validity may be one or more of the following.
(1) There is at least one reference signal, configured for the four-step RA-SDT, with a channel quality corresponding thereto higher than a channel threshold value of a four-step RA resource associated with the MT-SDT procedure. The reference signal may be an SSB, or a CSI-RS, etc. The channel quality may be an RSRP, an RSRQ, an SNR, an SINR, or RSSI, etc. For example, there is at least one SSB, configured for the four-step RA-SDT, with an RSRP corresponding thereto higher than a channel threshold value of a four-step RA resource associated with the MT-SDT procedure.
(2) The downlink path loss is lower than the channel threshold value of the four-step random access resource associated with the MT-SDT procedure.

In an embodiment, the method for small data transmission provided in the embodiments of the present application further includes:
receiving one or more of the following from the network device:
a size threshold value of a data packet for the MT-SDT procedure;
a channel threshold value of a CG resource associated with the MT-SDT procedure; or
a channel threshold value of a random access resource associated with the MT-SDT procedure.

In an embodiment, the network side may configure one or more pieces of the following information and inform the terminal to assist in selecting the way of transmission for the MT-SDT data.
(1) The size threshold value of the data packet for the MT-SDT procedure The MT-SDT packet size threshold is lower than the MO-SDT packet size threshold.
(2) The channel threshold value of the CG resource associated with the MT-SDT procedure The network side configures the channel threshold value for the CG resource associated with the MT-SDT procedure. In an embodiment, the channel threshold value of the CG resource or the RA resource associated with the MT-SDT procedure configured by the network device and the channel threshold value of the CG resource or the RA resource associated with the MO-SDT procedure configured by the network device may be the same, independent, or unassociated with each other.

In case that the channel quality of the reference signal configured for CG-SDT is lower than the channel threshold value of the CG resource associated with the MT-SDT procedure, it indicates that the distance between the terminal and the network device is far, and the transmission rate of CG-SDT is affected.

In an embodiment, the channel threshold value of CG resource associated with the MT-SDT procedure is same to the channel threshold value of CG resource associated with the MO-SDT procedure configured by the network device.

(3) The channel threshold value of the random access resource associated with the MT-SDT procedure The network side configures the channel threshold value for the RA resource associated with the MT-SDT procedure. In an embodiment, the channel threshold value of the RA resource associated with the MT-SDT procedure configured by the network device and the channel threshold value of the RA resource associated with the MO-SDT procedure configured by the network device may be the same, independent, or unassociated with each other.

In case that the channel quality of the reference signal configured for RA-SDT is lower than the channel threshold value of the RA resource associated with the MT-SDT procedure, it indicates that the distance between the terminal and the network device is far, and the transmission rate of RA-SDT is affected.

In an embodiment, the channel threshold value of the random access resource associated with the MT-SDT procedure is same to the channel threshold value of the random access resource associated with the MO-SDT procedure configured by the network device.

The reference signal may be an SSB, or a CSI-RS, etc. In the embodiments of the present application, SSB is taken for example for explanation. The channel quality may be one or more of an RSRP, an RSRQ, an SNR, an SINR, and RSSI, etc.

The above information transmitted from the network device may be carried by one or more of the following: a paging message, downlink control information in a paging message, a broadcast and/or system message (such as a system information block (SIB) message), an RRC release message, other RRC messages dedicated for the MT-SDT procedure, or other RRC dedicated messages. The above information and the MT indication may be transmitted in the same message, or in different messages. The above information may be transmitted to the terminal simultaneously with the MT instruction, or transmitted to the terminal after or before the MT instruction.

Below are several examples to further introduce the solution of the embodiments of the present application.

Example 1: the terminal determines the way of transmission for the MT-SDT data based on the indication information and/or the delay information.

Referring to FIG. 3, in step 302, the terminal selects the corresponding SDT procedure (ways of transmission include CG-SDT, two-step RA-SDT, or four-step RA-SDT), including the followings.

The UE receives a paging message, determines to initiate a UL response for the paging message using the way of MT-SDT, selects the way of transmission for the MT-SDT data, and transmits an RRC resume request message to the network. The paging message received by the UE may include indication information for MT-SDT type paging, and the indication information is transmitted in the downlink control information of the paging message.

The UE receives packet size threshold information associated with the MT-SDT procedure for uplink data transmission from the system message or dedicated signaling of the network device, as well as CG-SDT channel threshold information, two-step RA threshold information, and four-step RA threshold information associated with the MT-SDT procedure.

The method for UE to select the way of transmission for the MT-SDT data is as follows.

The UE preferably selects a CG resource corresponding to CG-SDT to transmit a UL response message for the MT-SDT procedure, i.e., the RRC resume request message. The UE preferably selects a CG resource corresponding to CG-SDT and needs to determine whether the CG resource is valid. The validity includes: CG-SDT is configured on the corresponding carrier; the TA of CG-SDT is valid; there is at least one SSB, configured for CG-SDT, with an SS-RSRP higher than the CG-SDT RSRP threshold is available.

In addition, it may further include the validity associated with the delay requirement.

The difference between the time domain location of a CG resource that transmitting the UL response and the time of receiving the paging message should be less than a pre-configured value; the pre-configured value may be transmitted from the base station through a system message, carried in a paging message, or transmitted to the UE through dedicated signaling. Alternatively, the CG resource corresponding to CG-SDT meets the delay requirement.

Furthermore, it is determined based on an enable message of a gNB that whether CG-SDT is used for UL response for the MT-SDT paging message; the network side enables the UE to use CG resource to transmit UL response information for the MT-SDT paging message, or the network restricts the UE from using CG resource to transmit UL response information for the MT-SDT paging message.

Furthermore, based on the delay information carried by the paging message or dedicated signaling, in case that the CG resource meets the delay requirement, the CG resource is used; otherwise, the CG resource is not used.

In case that the CG resource meets the condition, that is, the CG resource is valid (in an embodiment, the packet size transmitted from the base station is lower than the threshold value and/or the delay requirement associated with MT-SDT is met), the CG resource is used to transmit the UL response message for MT-SDT, as well as possible subsequent UL data.

In case that the CG resource does not meet the condition, it is evaluated that whether the MT-SDT condition of the two-step RA is met. That is, it is first evaluated that whether the channel quality is higher than the threshold value of the two-step RA channel used for MT-SDT. If so, the MT-SDT procedure of two-step RA is selected. Otherwise, it is evaluated that whether the channel quality is higher than the threshold value of the four-step RA channel used for MT-SDT. If so, the SDT procedure of four-step RA is selected. The two-step RA threshold value for MT-SDT may be an existing two-step RA channel threshold value used by MO-SDT, or the channel threshold value configured for MT-SDT in the broadcast message for the two-step RA; the four-step RA threshold value for MT-SDT may be an existing four-step RA channel threshold value used by MO-SDT, or the channel threshold value configured for MT-SDT in the broadcast message for the four-step RA.

After selecting the way of transmission for MT-SDT (CG-SDT, two-step RA-SDT, and four-step RA-SDT), the UE initiates UL response information for the paging message on the corresponding resource.

Example 2: the terminal determines the way of transmission for the MT-SDT data based on the resource usage (dedicated resource or shared resource).

In case that the RA resource for MT-SDT configured by the network are dedicated to MT-SDT, and the CG resource used for MT-SDT is a shared resource for MO-SDT and MT-SDT, the UE may preferably select an RA resource dedicated to MT-SDT.

In an embodiment, the network side indicates the UE to preferably select the RA resource dedicated to MT-SDT; or the network side provides information on the success rate or busy rate of the shared resource for MT-SDT and MO-SDT. For UE, when the success rate information transmitted from the network side is higher than a threshold value, or the busy rate information is lower than a threshold value, the UE selects the CG resource shared by MO-SDT and MT-SDT to trigger the MT-SDT procedure, otherwise the terminal uses the RA resource dedicated to MT-SDT to trigger the MT-SDT procedure.

In the method for small data transmission provided in the embodiments of the present application, in case that the terminal determines that the network device triggers the MT-SDT procedure, the terminal selects the way of transmission for the MT-SDT data, including CG-SDT and RA-SDT. Based on the determined way of transmission, the terminal transmits an RRC resume request message to the network device to request the network device to resume MT-SDT associated radio bearers, which provides a selection method for the way of transmission for the MT-SDT procedure.

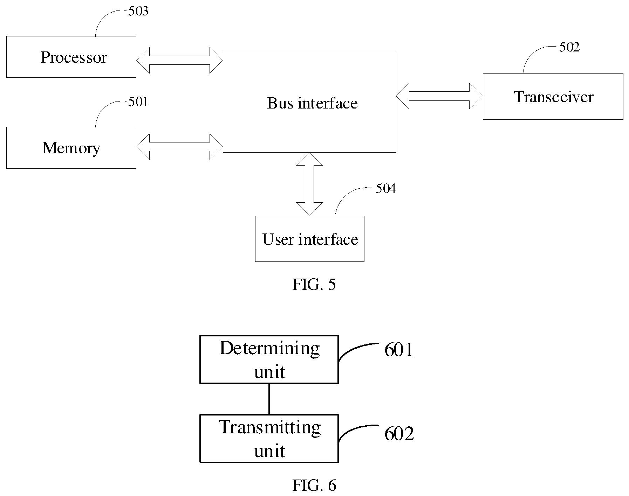

FIG. 5 is a schematic structural diagram of a terminal according to an embodiment of the present application. As shown in FIG. 5, the terminal includes a memory 501, a transceiver 502, and a processor 503, where
the memory 501 is used for storing a computer program; the transceiver 502 is used for transmitting and receiving data under control of the processor 503.

In an embodiment, the transceiver 502 is used for transmitting and receiving data under control of the processor 503.

In FIG. 5, a bus architecture may include any number of interconnected buses and bridges, which are linked together through various circuits of one or more processors represented by the processor 803 and one or more memories represented by the memory 801. The bus architecture may also link together various other circuits, such as peripherals, voltage regulators, and power management circuits, etc., which are well known in the art, and therefore are not further described in the present application. The bus interface provides an interface. The transceiver 502 may include multiple elements, i.e., including a transmitter and a receiver, and provide units for communication with various other devices over transmission media including wireless channels, wired channels, fiber optic cables, and the like. For different user devices, the user interface 504 may also be an interface that may connect external and internal devices, including but not limited to keypads, displays, speakers, microphones, joysticks, etc.

The processor 503 is responsible for managing the bus architecture and general processing, and the memory 501 may store data used by the processor 503 when performing operations.

In an embodiment, the processor 803 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods performed by the terminal provided in the embodiments of the present application based on the obtained executable instructions. The processor and the memory may also be arranged physically separately.

The processor 503 is used for reading the computer program in the memory 501 and performing the following operations:
determining a way of transmission for mobile terminate small data transmission (MT-SDT) data, where the way of transmission includes a first way based on configured grant (CG) and a second way based on random access; and
transmitting a radio resource control (RRC) resume request message to a network device based on the determined way of transmission in case that it is determined that an MT-SDT procedure is triggered.

In an embodiment, determining the way of transmission for the MT-SDT data includes:
determining the first priority of the first way based on CG and the second priority of the second way based on random access based on the first information transmitted from the network device or pre-defined;
determining the way of transmission for the MT-SDT data based on the first priority and the second priority.

In an embodiment, determining the first priority of the first way based on CG and the second priority of the second way based on random access includes:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

In an embodiment, determining the first priority of the first way based on CG and the second priority of the second way based on random access includes:
determining the first priority of the first way based on CG and the second priority of the second way based on random access based on the first information transmitted from the network device or pre-defined, where
the first information includes delay information and/or indication information, where the delay information is used to represent a delay requirement for the MT-SDT, and the indication information is used to indicate that the network device triggers the MT-SDT procedure or uses the MT-SDT procedure to trigger an uplink response message for a paging message.

In an embodiment, determining that the first priority of the first way based on CG is higher than the second priority of the second way based on random access in case that the first information includes the indication information.

In an embodiment, the indication information is further used to indicate whether to use the first way based on CG to transmit an uplink response message for the MT-SDT procedure or whether to use the second way based on random access to transmit an uplink response message for the MT-SDT procedure.

In an embodiment, determining the first priority of the first way based on CG and the second priority of the second way based on random access includes:
in case that the indication information indicates to use the first way based on CG to transmit the uplink response message for the MT-SDT procedure, and/or the first way based on CG meets the delay requirement, determining that the first priority of the first way based on CG is higher than the second priority of the second way based on random access.

In an embodiment, the first way based on CG meets the delay requirement, including:
a time difference between a time-domain position of the CG resource corresponding to the first way based on CG and a time point of receiving the paging message transmitted from the network device meets the delay requirement; or
the CG resource corresponding to the first way based on CG meets the delay requirement.

In an embodiment, determining the first priority of the first way based on CG and the second priority of the second way based on random access includes:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

In an embodiment, the second way based on random access meets the delay requirement, including:
a time difference between a time-domain position of a random access resource corresponding to the second way based on random access and a time point of receiving the paging message transmitted from the network device meets the delay requirement; or
a random access resource corresponding to the second way based on random access meets the delay requirement.

In an embodiment, determining the way of transmission for the MT-SDT data based on the first priority and the second priority includes:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, where
the CG resource corresponding to the first way based on CG meets validity, including:
   a corresponding carrier is configured with the first way based on CG;
   a timing advance corresponding to the first way based on CG is valid; and
   there is at least one reference signal, configured for the first way based on CG, with a channel quality corresponding thereto higher than a channel threshold value of a CG resource associated with the MT-SDT procedure.

In an embodiment, the second way based on random access includes a way based on two-step random access and a way based on four-step random access; and
determining the way of transmission for the MT-SDT data based on the first priority and the second priority includes:
in case it is determined that the second priority of the second way based on random access is higher than the first priority of the first way based on CG, determining the way of transmission for the MT-SDT data based on the priority of the two-step random access, the priority of the four-step random access, the validity of the two-step random access, and the validity of the four-step random access.

In an embodiment, the priority of the way based on two-step random access is higher than the priority of the way based on four-step random access. Determining the way of transmission for the MT-SDT data based on the priority of the two-step random access, the priority of the four-step random access, the validity of the two-step random access, and the validity of the four-step random access includes:
determining whether the way based on two-step random access meets validity;
determining the way of transmission for the MT-SDT data as the way based on two-step random access in case that the way based on two-step random access meets validity;
determining whether the way based on four-step random access meets validity in case that the way based on two-step random access does not meet validity; and
determining the way of transmission for the MT-SDT data as the way based on four-step random access in case that the way based on four-step random access meets validity.

In an embodiment, the way based on two-step random access meets validity, including one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, including one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

In an embodiment, the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

In an embodiment, the delay information is used to represent one or more of the following:
a delay difference associated threshold value; or
an urgency level of delay of an associated service for the MT-SDT procedure.

In an embodiment, the processor 503 is used for reading the computer program in the memory 501 and further performing the following operations:
receiving one or more of the following from the network device:
a size threshold value of a data packet for the MT-SDT procedure;
a channel threshold value of a CG resource associated with the MT-SDT procedure; or
a channel threshold value of a random access resource associated with the MT-SDT procedure.

In an embodiment, the channel threshold value of the random access resource associated with the MT-SDT procedure is same to a channel threshold value of a random access resource associated with a mobile original small data transmission (MO-SDT) procedure configured by the network device; and/or the channel threshold value of the CG resource associated with the MT-SDT procedure is same to a channel threshold value of a CG resource associated with a mobile original small data transmission (MO-SDT) procedure configured by the network device.

It should be noted that the terminal provided in the embodiments of the present application may implement all the method steps implemented by the method embodiment performed by a terminal, and may achieve the same technical effects. The same parts and beneficial effects as the method embodiment in this embodiment are not repeated.

FIG. 6 is a schematic structural diagram of an apparatus for small data transmission according to an embodiment of the present application. As shown in FIG. 6, the apparatus includes:
a determining unit 601, used for determining a way of transmission for mobile terminate small data transmission (MT-SDT) data, where the way of transmission includes a first way based on configured grant (CG) and a second way based on random access; and
a transmitting unit 602, used for transmitting a radio resource control (RRC) resume request message to a network device based on the determined way of transmission in case that it is determined that an MT-SDT procedure is triggered.

In an embodiment, the determining unit 601 includes:
a first determining module, used for determining a first priority of the first way based on CG and a second priority of the second way based on random access based on first information transmitted from the network device or pre-defined; and
a second determining module, used for determining the way of transmission for the MT-SDT data based on the first priority and the second priority.

In an embodiment, the first determining module is used for:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

In an embodiment, the first determining module is used for:
determining the first priority of the first way based on CG and the second priority of the second way based on random access based on the first information transmitted from the network device or pre-defined, where
the first information includes delay information and/or indication information, where the delay information is used to represent a delay requirement for the MT-SDT, and the indication information is used to indicate that the network device triggers the MT-SDT procedure or uses the MT-SDT procedure to trigger an uplink response message for a paging message.

In an embodiment, determining that the first priority of the first way based on CG is higher than the second priority of the second way based on random access in case that the first information includes the indication information.

In an embodiment, the indication information is further used to indicate whether to use the first way based on CG to transmit an uplink response message for the MT-SDT procedure or whether to use the second way based on random access to transmit an uplink response message for the MT-SDT procedure.

In an embodiment, the first determining module is used for:
in case that the indication information indicates to use the first way based on CG to transmit the uplink response message for the MT-SDT procedure, and/or the first way based on CG meets the delay requirement, determining that the first priority of the first way based on CG is higher than the second priority of the second way based on random access.

In an embodiment, the first way based on CG meets the delay requirement, including:
a time difference between a time-domain position of the CG resource corresponding to the first way based on CG and a time point of receiving the paging message transmitted from the network device meets the delay requirement; or
the CG resource corresponding to the first way based on CG meets the delay requirement.

In an embodiment, the first determining module is used for:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

In an embodiment, the second way based on random access meets the delay requirement, including:
a time difference between a time-domain position of a random access resource corresponding to the second way based on random access and a time point of receiving the paging message transmitted from the network device meets the delay requirement; or
a random access resource corresponding to the second way based on random access meets the delay requirement.

In an embodiment, the second determining module is used for:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, where
the CG resource corresponding to the first way based on CG meets validity, including:
   a corresponding carrier is configured with the first way based on CG;
   a timing advance corresponding to the first way based on CG is valid; and
   there is at least one reference signal, configured for the first way based on CG, with a channel quality corresponding thereto higher than a channel threshold value of a CG resource associated with the MT-SDT procedure.

In an embodiment, the second way based on random access includes a way based on two-step random access and a way based on four-step random access, and the second determining module is used for:
in case that it is determined that the second priority of the second way based on random access is higher than the first priority of the first way based on CG, determining the way of transmission for the MT-SDT data based on the priority of the way based on two-step random access, the priority of the way based on four-step random access, the validity of the way based on two-step random access, and the validity of the way based on four-step random access.

In an embodiment, the second priority of the way based on random access is higher than the second priority of the way based on four-step random access, and the second determining module is used for:
determining whether the way based on two-step random access meets validity;
determining the way of transmission for the MT-SDT data as the way based on two-step random access in case that the way based on two-step random access meets validity;
determining whether the way based on four-step random access meets validity in case that the way based on two-step random access does not meet validity; and
determining the way of transmission for the MT-SDT data as the way based on four-step random access in case that the way based on four-step random access meets validity.

In an embodiment, the way based on two-step random access meets validity, including one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, including one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

In an embodiment, the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

In an embodiment, the delay information is used to represent one or more of the following:
a delay difference associated threshold value; or
an urgency level of delay of an associated service for the MT-SDT procedure.

In an embodiment, the apparatus for small data transmission provided in the embodiments of the present application further includes:
a receiving unit, used for receiving one or more of the following from the network device:
a size threshold value of a data packet for the MT-SDT procedure;
a channel threshold value of a CG resource associated with the MT-SDT procedure; or
a channel threshold value of a random access resource associated with the MT-SDT procedure.

In an embodiment, the channel threshold value of the random access resource associated with the MT-SDT procedure is same to a channel threshold value of a random access resource associated with a mobile original small data transmission (MO-SDT) procedure configured by the network device; and/or the channel threshold value of the CG resource associated with the MT-SDT procedure is same to a channel threshold value of a CG resource associated with a mobile original small data transmission (MO-SDT) procedure configured by the network device.

The methods and apparatuses provided in each embodiment of the present application are based on the same application concept. As the principles of problem-solving by the methods and apparatuses are similar, the implementation of the apparatuses and methods may be referred to each other, which are not repeated.

It should be noted that the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In case that the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a USB flash disk, a mobile hard disk, a read-only memory (ROM), a random access memory (RAM), a magnetic disk, or a compact disk.

It should be noted that the above-mentioned apparatuses provided in the embodiments of the present application may realize all the method steps implemented in the above-mentioned method embodiments, and may achieve the same technical effects. Therefore, specific descriptions of the same parts and beneficial effects as the method embodiment in this embodiment are not repeated here.

The embodiments of the present application further provide a processor-readable storage medium, which stores a computer program for causing a processor to perform the method for small data transmission provided in the above embodiments, for example, including:
determining a way of transmission for mobile terminate small data transmission (MT-SDT) data, where the way of transmission includes a first way based on configured grant (CG) and a second way based on random access; and
transmitting a radio resource control (RRC) resume request message to a network device based on the determined way of transmission in case that it is determined that an MT-SDT procedure is triggered.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer-usable storage media (including but not limited to disk storage and optical storage) containing computer-usable program codes.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for small data transmission, comprising:
determining a way of transmission for mobile terminate small data transmission (MT-SDT) data, wherein the way of transmission comprises a first way based on configured grant (CG) and a second way based on random access; and
transmitting a radio resource control (RRC) resume request message to a network device based on the determined way of transmission in case that it is determined that an MT-SDT procedure is triggered.

2. The method of claim 1, wherein determining the way of transmission for the MT-SDT data comprises:
determining a first priority of the first way based on CG and a second priority of the second way based on random access based on first information transmitted from the network device or pre-defined; and
determining the way of transmission for the MT-SDT data based on the first priority and the second priority.

3. The method of claim 2, wherein determining the first priority of the first way based on CG and the second priority of the second way based on random access comprises:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

4. The method of claim 2, wherein determining the first priority of the first way based on CG and the second priority of the second way based on random access comprises:
determining the first priority of the first way based on CG and the second priority of the second way based on random access based on the first information transmitted from the network device or pre-defined, wherein
the first information comprises delay information and/or indication information, wherein the delay information is used to represent a delay requirement for the MT-SDT, and the indication information is used to indicate that the network device triggers the MT-SDT procedure or uses the MT-SDT procedure to trigger an uplink response message for a paging message.

5. The method of claim 4, wherein determining that the first priority of the first way based on CG is higher than the second priority of the second way based on random access in case that the first information comprises the indication information.

6. The method of claim 4, wherein the indication information is further used to indicate whether to use the first way based on CG to transmit an uplink response message for the MT-SDT procedure or whether to use the second way based on random access to transmit an uplink response message for the MT-SDT procedure.

7. The method of claim 6, wherein determining the first priority of the first way based on CG and the second priority of the second way based on random access comprises:
in case that the indication information indicates to use the first way based on CG to transmit the uplink response message for the MT-SDT procedure, and/or the first way based on CG meets the delay requirement, determining that the first priority of the first way based on CG is higher than the second priority of the second way based on random access.

8. The method of claim 7, wherein the first way based on CG meets the delay requirement, comprising:
a time difference between a time-domain position of the CG resource corresponding to the first way based on CG and a time point of receiving the paging message transmitted from the network device meets the delay requirement; or
the CG resource corresponding to the first way based on CG meets the delay requirement.

9. The method of claim 6, wherein determining the first priority of the first way based on CG and the second priority of the second way based on random access comprises:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

10. The method of claim 9, wherein the second way based on random access meets the delay requirement, comprising:
a time difference between a time-domain position of a random access resource corresponding to the second way based on random access and a time point of receiving the paging message transmitted from the network device meets the delay requirement; or
a random access resource corresponding to the second way based on random access meets the delay requirement.

11. The method of claim 2, wherein determining the way of transmission for the MT-SDT data based on the first priority and the second priority comprises:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, wherein
the CG resource corresponding to the first way based on CG meets validity, comprising:
a corresponding carrier is configured with the first way based on CG;
a timing advance corresponding to the first way based on CG is valid; and
there is at least one reference signal, configured for the first way based on CG, with a channel quality corresponding thereto higher than a channel threshold value of a CG resource associated with the MT-SDT procedure.

12. The method of claim 2, wherein the second way based on random access comprises a way based on two-step random access and a way based on four-step random access; and
wherein determining the way of transmission for the MT-SDT data based on the first priority and the second priority comprises:
in case that it is determined that the second priority of the second way based on random access is higher than the first priority of the first way based on CG, determining the way of transmission for the MT-SDT data based on a priority of the way based on two-step random access, a priority of the way based on four-step random access, validity of the way based on two-step random access, and validity of the way based on four-step random access.

13. The method of claim 12, wherein the way based on two-step random access meets validity, comprising one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, comprising one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

14. The method of claim 4, wherein the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

15. The method of claim 4, wherein the delay information is used to represent one or more of the following:
a delay difference associated threshold value; or
an urgency level of delay of an associated service for the MT-SDT procedure.

16. The method of any of claims 1 to 15, further comprising:
receiving one or more of the following transmitted from the network device:
a size threshold value of a data packet for the MT-SDT procedure;
a channel threshold value of a CG resource associated with the MT-SDT procedure; or
a channel threshold value of a random access resource associated with the MT-SDT procedure.

17. The method of claim 16, wherein the channel threshold value of the random access resource associated with the MT-SDT procedure is same to a channel threshold value of a random access resource associated with a mobile original small data transmission (MO-SDT) procedure configured by the network device; and/or
the channel threshold value of the CG resource associated with the MT-SDT procedure is same to a channel threshold value of a CG resource associated with a mobile original small data transmission (MO-SDT) procedure configured by the network device.

18. A terminal, comprising a memory, a transceiver, and a processor, wherein
the memory is used for storing a computer program; the transceiver is used for receiving and transmitting data under control of the processor; and the processor is used for reading the computer program in the memory and performing the following operations:
determining a way of transmission for mobile terminate small data transmission (MT-SDT) data, wherein the way of transmission comprises a first way based on configured grant (CG) and a second way based on random access; and
transmitting a radio resource control (RRC) resume request message to a network device based on the determined way of transmission in case that it is determined that an MT-SDT procedure is triggered.

19. The terminal of claim 18, wherein determining the way of transmission for the MT-SDT data comprises:
determining a first priority of the first way based on CG and a second priority of the second way based on random access based on first information transmitted from the network device or pre-defined; and
determining the way of transmission for the MT-SDT data based on the first priority and the second priority.

20. The terminal of claim 19, wherein determining the first priority of the first way based on CG and the second priority of the second way based on random access comprises:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

21. The terminal of claim 19, wherein determining the first priority of the first way based on CG and the second priority of the second way based on random access comprises:
determining the first priority of the first way based on CG and the second priority of the second way based on random access based on the first information transmitted from the network device or pre-defined, wherein
the first information comprises delay information and/or indication information, wherein the delay information is used to represent a delay requirement for the MT-SDT, and the indication information is used to indicate that the network device triggers the MT-SDT procedure or uses the MT-SDT procedure to trigger an uplink response message for a paging message.

22. The terminal of claim 21, wherein determining that the first priority of the first way based on CG is higher than the second priority of the second way based on random access in case that the first information comprises the indication information.

23. The terminal of claim 21, wherein the indication information is further used to indicate whether to use the first way based on CG to transmit an uplink response message for the MT-SDT procedure or whether to use the second way based on random access to transmit an uplink response message for the MT-SDT procedure.

24. The terminal of claim 23, wherein determining the first priority of the first way based on CG and the second priority of the second way based on random access comprises:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG.

25. The terminal of claim 24, wherein the first way based on CG meets the delay requirement, comprising:
a time difference between a time-domain position of the CG resource corresponding to the first way based on CG and a time point of receiving the paging message transmitted from the network device meets the delay requirement; or
the CG resource corresponding to the first way based on CG meets the delay requirement.

26. The terminal of claim 23, wherein determining the first priority of the first way based on CG and the second priority of the second way based on random access comprises:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

27. The terminal of claim 26, wherein the second way based on random access meets the delay requirement, comprising:
a time difference between a time-domain position of a random access resource corresponding to the second way based on random access and a time point of receiving the paging message transmitted from the network device meets the delay requirement; or
a random access resource corresponding to the second way based on random access meets the delay requirement.

28. The terminal of claim 19, wherein determining the way of transmission for the MT-SDT data based on the first priority and the second priority comprises:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, wherein
the CG resource corresponding to the first way based on CG meets validity, comprising:
a corresponding carrier is configured with the first way based on CG;
a timing advance corresponding to the first way based on CG is valid; and
there is at least one reference signal, configured for the first way based on CG, with a channel quality corresponding thereto higher than a channel threshold value of a CG resource associated with the MT-SDT procedure.

29. The terminal of claim 19, wherein the second way based on random access comprises a way based on two-step random access and a way based on four-step random access; and
determining the way of transmission for the MT-SDT data based on the first priority and the second priority comprises:
in case that it is determined that the second priority of the second way based on random access is higher than the first priority of the first way based on CG, determining the way of transmission for the MT-SDT data based on a priority of the way based on two-step random access, a priority of the way based on four-step random access, validity of the way based on two-step random access, and validity of the way based on four-step random access.

30. The terminal of claim 29, wherein the way based on two-step random access meets validity, comprising one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, comprising one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

31. The terminal of claim 21, wherein the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

32. The terminal of claim 21, wherein the delay information is used to represent one or more of the following:
a delay difference associated threshold value; or
an urgency level of delay of an associated service for the MT-SDT procedure.

33. The terminal of any of claims 18 to 32, wherein the processor is used for reading the computer program in the memory, and further performs the following operations:
receiving one or more of the following transmitted from the network device:
a size threshold value of a data packet for the MT-SDT procedure;
a channel threshold value of a CG resource associated with the MT-SDT procedure; or
a channel threshold value of a random access resource associated with the MT-SDT procedure.

34. The terminal of claim 33, wherein the channel threshold value of the random access resource associated with the MT-SDT procedure is same to a channel threshold value of a random access resource associated with a mobile original small data transmission (MO-SDT) procedure configured by the network device;
and/or
the channel threshold value of the CG resource associated with the MT-SDT procedure is same to a channel threshold value of a CG resource associated with a mobile original small data transmission (MO-SDT) procedure configured by the network device.

35. An apparatus for small data transmission, comprising:
a determining unit, used for determining a way of transmission for mobile terminate small data transmission (MT-SDT) data, wherein the way of transmission comprises a first way based on configured grant (CG) and a second way based on random access; and
a transmitting unit, used for transmitting a radio resource control (RRC) resume request message to a network device based on the determined way of transmission in case that it is determined that an MT-SDT procedure is triggered.

36. The apparatus of claim 35, wherein the determining unit comprises:
a first determining module, used for determining a first priority of the first way based on CG and a second priority of the second way based on random access based on first information transmitted from the network device or pre-defined; and
a second determining module, used for determining the way of transmission for the MT-SDT data based on the first priority and the second priority.

37. The apparatus of claim 36, wherein the first determining module is further used for:
in case that a CG resource corresponding to the first way based on CG is a shared resource for the MT-SDT procedure and a mobile original small data transmission (MO-SDT) procedure, and a random access resource corresponding to the second way based on random access is a dedicated resource for the MT-SDT, determining that the second priority of the second way based on random access is higher than the first priority of the first way based on CG.

38. The apparatus of claim 36, wherein the first determining module is further used for:
determining the first priority of the first way based on CG and the second priority of the second way based on random access based on the first information transmitted from the network device or pre-defined, wherein
the first information comprises delay information and/or indication information, wherein the delay information is used to represent a delay requirement for the MT-SDT, and the indication information is used to indicate that the network device triggers the MT-SDT procedure or uses the MT-SDT procedure to trigger an uplink response message for a paging message.

39. The apparatus of claim 38, wherein determining that the first priority of the first way based on CG is higher than the second priority of the second way based on random access in case that the first information comprises the indication information.

40. The apparatus of claim 38, wherein the indication information is further used to indicate whether to use the first way based on CG to transmit an uplink response message for the MT-SDT procedure or whether to use the second way based on random access to transmit an uplink response message for the MT-SDT procedure.

41. The apparatus of claim 40, wherein the first determining module is further used for:
in case that the indication information indicates to use the first way based on CG to transmit the uplink response message for the MT-SDT procedure, and/or the first way based on CG meets the delay requirement, determining that the first priority of the first way based on CG is higher than the second priority of the second way based on random access.

42. The apparatus of claim 41, wherein the first way based on CG meets the delay requirement comprising:
a time difference between a time-domain position of the CG resource corresponding to the first way based on CG and a time point of receiving the paging message transmitted from the network device meets the delay requirement; or
the CG resource corresponding to the first way based on CG meets the delay requirement.

43. The apparatus of claim 40, wherein the first determining module is further used for:
in case that the indication information indicates not to use the first way based on CG to transmit the uplink response message for the MT-SDT procedure, and/or the first way based on CG does not meet the delay requirement, determining that the second priority of the second way based on random access is higher than the first priority of the first way based on CG; or
in case that the indication information indicates to use the second way based on random access to transmit the uplink response message for the MT-SDT procedure, and/or the second way based on random access meets the delay requirement, determining that the second priority of the second way based on random access is higher than the first priority of the first way based on CG.

44. The apparatus of claim 43, wherein the second way based on random access meets the delay requirement, comprising:
a time difference between a time-domain position of a random access resource corresponding to the second way based on random access and a time point of receiving the paging message transmitted from the network device meets the delay requirement; or
a random access resource corresponding to the second way based on random access meets the delay requirement.

45. The apparatus of claim 36, wherein the second determining module is further used for:
in case that it is determined that the first priority of the first way based on CG is higher than the second priority of the second way based on random access, determining whether a CG resource corresponding to the first way based on CG meets validity; and
determining the way of transmission for the MT-SDT data as the first way based on CG in case that the CG resource corresponding to the first way based on CG meets validity, wherein
the CG resource corresponding to the first way based on CG meets validity, comprising:
a corresponding carrier is configured with the first way based on CG;
a timing advance corresponding to the first way based on CG is valid; and
there is at least one reference signal, configured for the first way based on CG, with a channel quality corresponding thereto higher than a channel threshold value of a CG resource associated with the MT-SDT procedure.

46. The apparatus of claim 36, wherein the second way based on random access comprises a way based on two-step random access and a way based on four-step random access; and
the second determining module is further used for:
in case that it is determined that the second priority of the second way based on random access is higher than the first priority of the first way based on CG, determining the way of transmission for the MT-SDT data based on a priority of the way based on two-step random access, a priority of the way based on four-step random access, validity of the way based on two-step random access, and validity of the way based on four-step random access.

47. The apparatus of claim 46, wherein the way based on two-step random access meets validity, comprising one or more of the following: there is at least one reference signal, configured for the way based on two-step random access, with a channel quality corresponding thereto higher than a channel threshold value of a two-step random access resource associated with the MT-SDT procedure; or a downlink path loss is lower than a channel threshold value of a two-step random access resource associated with the MT-SDT procedure;
and/or
the way based on four-step random access meets validity, comprising one or more of the following: there is at least one reference signal, configured for the way based on four-step random access, with a channel quality corresponding thereto higher than a channel threshold value of a four-step random access resource associated with the MT-SDT procedure; or a downlink path loss is lower than a channel threshold value of a four-step random access resource associated with the MT-SDT procedure.

48. The apparatus of claim 38, wherein the first information is carried by one or more of the following:
a paging message transmitted from the network device;
downlink control information in a paging message transmitted from the network device;
a broadcast and/or system message transmitted from the network device;
an RRC message dedicated for the MT-SDT procedure transmitted from the network device;
an RRC release message transmitted from the network device; or
an RRC dedicated message transmitted from the network device.

49. The apparatus of claim 38, wherein the delay information is used to represent one or more of the following:
a delay difference associated threshold value; or
an urgency level of delay of an associated service for the MT-SDT procedure.

50. The apparatus of any of claims 35 to 49, further comprising:
receiving one or more of the following transmitted from the network device:
a size threshold value of a data packet for the MT-SDT procedure;
a channel threshold value of a CG resource associated with the MT-SDT procedure; or
a channel threshold value of a random access resource associated with the MT-SDT procedure.

51. The apparatus of claim 50, wherein the channel threshold value of the random access resource associated with the MT-SDT procedure is same to a channel threshold value of a random access resource associated with a mobile original small data transmission (MO-SDT) procedure configured by the network device; and/or
the channel threshold value of the CG resource associated with the MT-SDT procedure is same to a channel threshold value of a CG resource associated with a mobile original small data transmission (MO-SDT) procedure configured by the network device.

52. A computer-readable storage medium storing a computer program, wherein the computer program is used for causing a computer to perform the method of any of claims 1 to 17.
